# EUROPÄISCHE PATENTSCHRIFT

(11) **EP 4 331 987 B1**
(45) Veröffentlichungstag und Bekanntmachung des Hinweises auf die Patenterteilung: **17.12.2025**
(21) Anmeldenummer: 22192739.5
(22) Anmeldetag: 30.08.2022
(51) Int. Cl.: B64D 11/00

(54) **KABINENMONUMENT UND LUFTFAHRZEUG**
CABIN MONUMENT AND AIRCRAFT
MONUMENT DE CABINE ET AÉRONEF

(43) Veröffentlichungstag der Anmeldung: 06.03.2024
(73) Patentinhaber: Airbus Operations GmbH, 21129 Hamburg (DE)
(72) Erfinder: Schultz, Sarico, 21129 Hamburg (DE); Lüdtke, Michael, 21129 Hamburg (DE); Berkhahn, Sven-Olaf, 21129 Hamburg (DE)

(56) Entgegenhaltungen:
- EP-A1- 3 378 785
- EP-A1- 3 546 356
- EP-A1- 3 552 964
- US-A1- 2006 228 558
- US-A1- 2009 224 103
- US-A1- 2013 016 525
- US-A1- 2015 274 068
- US-A1- 2020 130 839
- US-A1- 2022 055 751

## Beschreibung

Die vorliegende Erfindung betrifft ein Kabinenmonument sowie ein Luftfahrzeug.

In modernen Luftfahrzeugen, insbesondere solchen für den Transport von Passagieren über lange Strecken, findet eine Vielzahl von an diversen Kabinenmonumenten angebrachten Bildschirmen Anwendung. Als Kabinenmonument wird hierbei jedes Bauteil, welches innerhalb der Kabine eines Luftfahrzeugs angeordnet ist, verstanden. Insbesondere kann es sich hierbei um Kabinentrennwände, Sitzbaugruppen oder auch Stauräume für Handgepäck handeln. Diese Bildschirme werden sowohl für das Anzeigen wichtiger, beispielsweise sicherheitsrelevanter, Informationen als auch etwa für das Abspielen von Unterhaltungsmedien genutzt.

Jeder derart vorgesehene Bildschirm trägt zum Gesamtgewicht des Luftfahrzeugs bei, welches aus vielerlei Gründen, beispielsweise bezüglich des Treibstoffverbrauchs, möglichst gering gehalten werden soll. Bildschirme tragen im aktiven Zustand auch zum Energieverbrauch des Luftfahrzeugs bei, welcher ebenfalls möglichst gering gehalten werden soll, wobei ein inaktiver Bildschirm für den Betrachter schwarz erscheint und mit den zumeist hell gestalteten Kabinenmonumenten kontrastiert, was von Passagieren als unangenehm wahrgenommen werden kann.

Dokument EP3378785A1 offenbart ein Teppichanzeigesystem für die Innenkabine eines Flugzeugs, mit einem lichtemittierenden Element, das mit einer Trägerplatte gekoppelt und so konfiguriert ist, dass es Licht durch die Trägerplatte aussendet, um Lichteffekte durch die Teppichschicht zu erzeugen. Dokument US2009224103A1 offenbart eine Trennwand in einem Flugzeug. Dokument EP2531991A1 offenbart eine Flachbauende Leuchtanzeigeanordnung. Dokument US2020130839A1 offenbart ein Verkleidungsbauteil für eine Kabine eines Transportmittels. Dokument US2006228558A1 offenbart eine Staubschutzabdeckung für die Montage von Flugzeugfenstern. Dokument EP3546356A1 offenbart ein Anzeigesystem für eine Toilette eines Fahrzeugs. Dokument EP3552964A1 offenbart ein integriertes Flugzeugbeleuchtungs- und Anzeigefeld. Dokument US2015274068A1 offenbart eine beleuchtete Sitzbezugeinheit. Dokument US2022055751A1 offenbart ein integriertes Bedienfeld für Flugzeugsitze.

Vor diesem Hintergrund liegt der vorliegenden Erfindung die Aufgabe zugrunde, den Gewichts- und Energiebedarf von Bildschirmen in einem Luftfahrzeug zu reduzieren und gleichzeitig als unangenehm wahrgenommene visuelle Effekte zu vermeiden.

Erfindungsgemäß wird diese Aufgabe gelöst durch ein Kabinenmonument mit den Merkmalen des Patentanspruchs 1 sowie durch ein Luftfahrzeug mit den Merkmalen des Patentanspruchs 7.

Demgemäß ist ein Kabinenmonument vorgesehen. Ein solches Kabinenmonument kann beispielsweise eine Flugzeugküche ("Galley"), eine Flugzeugtoilette ("Lavatory"), eine Aufbewahrungsmöglichkeit ("Stowage") oder eine Trennwand ("Partition wall") sein. Das Kabinenmonument umfasst einen Monumentskörper, und eine mit dem Monumentskörper verbundene, transparente Folie. Die transparente Folie weist eine Vielzahl an lichtemittierenden Elementen auf.

Darüber hinaus ist ein Luftfahrzeug vorgesehen. Das Luftfahrzeug umfasst mindestens ein erfindungsgemäßes Kabinenmonument und eine Steuereinrichtung, welche dazu ausgebildet ist, die Vielzahl an lichtemittierenden Elementen des mindestens einen Kabinenmonuments zu steuern.

Die der vorliegenden Erfindung zugrunde liegende Idee besteht darin, in eine transparente Folie eingebettete, lichtemittierende Elemente als "Pixel" eines Bildschirms für ein Kabinenmonument zu verwenden. Demnach kann im Vergleich zu herkömmlichen Bildschirmen Gewicht gespart werden, da die transparente Folie sehr dünn und damit auch leicht ausgebildet ist, während bei Inaktivität der lichtemittierenden Elemente der visuelle Gesamteindruck des Kabinenmonuments aufgrund der Transparenz der Folie unverändert bleibt.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung des Kabinenmonuments können die lichtemittierenden Elemente als lichtemittierende Dioden ausgebildet sein. Hierdurch lassen sich die lichtemittierenden Elemente besonders klein, leicht und energieeffizient gestalten.

Gemäß eines weiteren Ausführungsbeispiels des Kabinenmonuments kann die transparente Folie auf einer Oberfläche des Monumentskörpers angebracht sein. Dies ermöglicht ein besonders leichte Fertigung, bzw. sogar eine Nachrüstung bereits bestehender Kabinenmonumente.

Gemäße einer Weiterbildung kann das Kabinenmonument weiterhin eine transparente Schutzbeschichtung aufweisen. Hierdurch kann die transparente Folie vorteilhaft vor Beschädigungen geschützt werden.

Gemäß der Erfindung, weist der Monumentskörper einen durchgehend transparenten Bereich auf, wobei die transparente Folie den transparenten Bereich zumindest teilweise überlappt. Hierdurch kann ermöglicht werden, dass in bestimmten Situationen durch das Kabinenmonument, beispielsweise in Form einer Kabinentrennwand, hindurchgesehen werden kann und in anderen Situationen nicht.

Gemäß einer Weiterbildung des Kabinenmonuments können die lichtemittierenden Elemente derart angeordnet sein, dass Licht durch den transparenten Bereich emittiert wird. Hierdurch kann die Folie dort angebracht werden, wo mit möglichst wenig Interaktion mit der Umwelt, beispielsweise mit Passagieren, gerechnet werden muss, was die Folie vor Beschädigung schützen kann.

Gemäß eines weiteren Ausführungsbeispiels des Kabinenmonuments kann das Kabinenmonument als Sitzbauteil oder Kabinentrennwand ausgebildet ist. Auf diesen Arten von Kabinenmonument können Bildschirm mannigfaltige vorteilhafte Funktionen erfülle, wie später noch ausführlich erläutert wird.

Gemäß eines weiteren Ausführungsbeispiels des Luftfahrzeugs kann die Steuereinrichtung dazu ausgebildet die, die lichtemittierenden Elemente des mindestens einen Kabinenmonuments in Abhängigkeit eines Betriebszustands des Luftfahrzeugs zu steuern. Hierdurch kann der Energieverbrauch der lichtemittierenden Elemente vorteilhaft präzise geregelt werden.

Gemäß einer Weiterbildung des Luftfahrzeugs kann der Betriebszustand des Luftfahrzeugs einen Startvorgang oder einen Landevorgang umfassend, während dem die lichtemittierenden Elemente derart gesteuert werden, dass Licht emittiert wird. Die Vorteile dieser Konfiguration werden später mit Hinblick auf die Figuren ausführlich erläutert.

Gemäß eines weiteren Ausführungsbeispiels des Luftfahrzeugs kann das Luftfahrzeug mindestens zwei Kabinenmonumente aufweisen, wobei die Steuereinrichtung dazu ausgebildet ist, die lichtemittierenden Elemente der mindestens zwei Kabinenmonumente in Abstimmung zueinander zu steuern. Hierdurch kann ein besonders vorteilhafter, harmonischer, visueller Gesamteindruck der Kabine des Luftfahrzeugs erreicht werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: eine schematische Darstellung eines Kabinenmonuments nach einem Ausführungsbeispiel der vorliegenden Erfindung;
- Fig. 2: eine schematische Darstellung eines Luftfahrzeugs nach einem Ausführungsbeispiel der Erfindung; und
- Fig. 3: eine schematische Darstellung eines Abschnitts eines Luftfahrzeugs nach einem Ausführungsbeispiel der vorliegenden Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

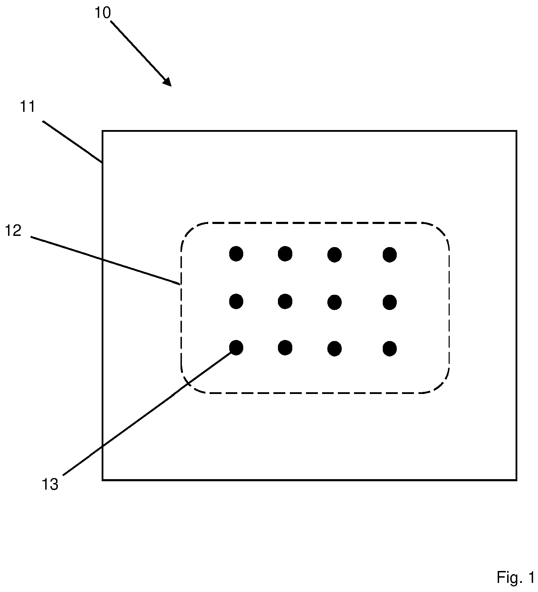

Fig. 1 zeigt eine schematische Darstellung eines Kabinenmonuments 10 nach einem bevorzugten Ausführungsbeispiel der vorliegenden Erfindung.

Das Kabinenmonument 10 weist einen Monumentskörper 11, und eine mit diesem Monumentskörper 11 verbundene, transparente Folie 12 auf. Die transparente Folie 12 weist eine Vielzahl von lichtemittierenden Elementen 13 auf.

Der in Figur 1 gezeigte Monumentskörper 11 wird beispielhaft durch ein Viereck repräsentiert. In einer realen Ausführungsform des Kabinenmonuments 10 kann der Monumentskörper 11 jedoch jede erdenkliche Form annehmen, in Abhängigkeit der Funktion, welche das Kabinenmonument 10 erfüllen soll. Insbesondere kann der Monumentskörper 11 auch aus einer Vielzahl an separaten Einzelteilen zusammengefügt sein.

Die Transparenz der Folie 12 wird in Figur 1 durch die Verwendung eines gestrichelten Umrisses angedeutet. Im Sinne der vorliegenden Erfindung bedeutet "transparent", dass ein menschlicher Betrachter den Monumentskörper 11 aus einer Entfernung von wenigen Zentimetern oder weiter durch die transparente Folie 12 hindurch wahrnehmen kann, ohne dass die transparente Folie den optischen Gesamteindruck des Monumentskörpers 11 beeinflusst. Dies gilt insbesondere in Situationen, in welchen die lichtemittierenden Elemente 13 kein Licht emittieren. In Situationen, in welchen die lichtemittierenden Elemente 13 Licht emittieren kann der optische Gesamteindruck für einen Betrachter durchaus beeinflusst werden, etwa dadurch dass sich durch Gesamtansicht des von allen lichtemittierenden Elementen 13 emittierten Lichts für den Betrachter eine bildliche Darstellung ergibt. In diesem Fall kann auch technisch gesehen noch eine "Transparenz" der Folie 13 insgesamt vorliegen, in dem Sinne, dass ein nicht zu vernachlässigender Anteil von von einer Seite aus auf die Folie 13 treffenden Lichts durch die Folie zur anderen Seite gelangen kann. Es kann jedoch sein, dass die Aufmerksamkeit eines Betrachters durch das emittierte Licht derart auf sich gezogen wird, dass Bereiche hinter der transparenten Folie 13 nicht mehr bewusst wahrgenommen werden. In all diesen Fällen wäre die Folie 13 dennoch "transparent" im Sinne der vorliegenden Anmeldung.

In Figur 1 ist die transparente Folie 12 als auf einer Oberfläche des Monumentskörpers 11 angebracht gezeigt. Die transparente Folie 12 kann jedoch auch in den Monumentskörper 11 integriert sein, insbesondere falls der Monumentskörper 11 aus mehreren Bestandteilen besteht. So kann eine Außenhülle eines Monumentskörpers 11 etwa aus mehreren, aufeinander laminierten Kunststoffschichten bestehen. In so einem Fall kann die transparente Folie 12 zwischen zweien dieser Schichten eingebettet sein, falls die Schichten zwischen der Folie und der Oberfläche transparent ausgebildet sind. Alternativ oder zusätzliche kann das Kabinenmonument 10 auch eine transparente Schutzbeschichtung aufweisen.

In Figur 1 werden insgesamt zwölf lichtemittierende Elemente 13 gezeigt, welche in einem regelmäßigen Gitter über die Fläche der transparenten Folie 12 angeordnet sind. In einer realen Ausgestaltung eines Kabinenmonuments 10 können beliebig viele lichtemittierende Elemente 13 vorgesehen sein, insbesondere genug, dass, wenn jedes lichtemittierende Element 13 als "Pixel" agiert ein ausreichend gut genug aufgelöstes Bild angezeigt werden kann.

In Figur 1 sind die lichtemittierenden Elemente 13 der Anschaulichkeit halber relativ groß im Vergleich zur Ausdehnung des Monumentskörpers 11 und der transparenten Folie 12 gezeigt. In einer realen Ausgestaltung des Kabinenmonuments 10 können die lichtemittierenden Elemente 13 jedoch jede beliebige Größe aufweisen, insbesondere eine derartige Größe, dass sie für das menschliche Auge ab einem Abstand von wenigen Zentimetern nicht mehr sichtbar sind.

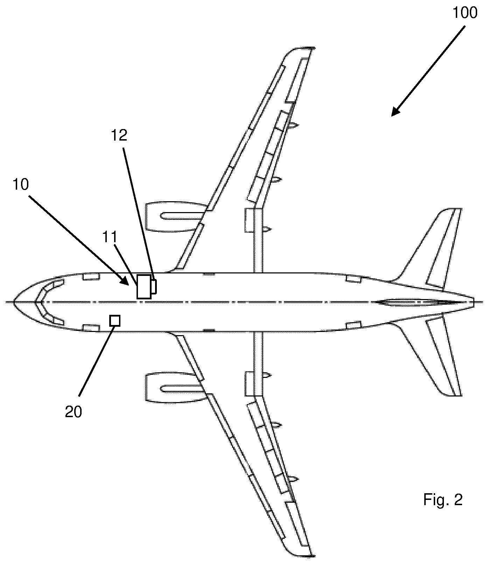

Fig. 2 zeigt eine schematische Darstellung eines Luftfahrzeugs 100 nach einem Ausführungsbeispiel der Erfindung.

Das Luftfahrzeug 100 weist eine Kabinenmonument 10 und eine Steuereinrichtung 20 auf. Das Kabinenmonument 10 weist einen Monumentskörper 11 und eine transparente Folie 12 auf. Die transparente Folie 12 weist eine Vielzahl an lichtemittierenden Elementen auf, welche aus Gründen der Übersichtlichkeit in Figur 2 nicht gezeigt werden.

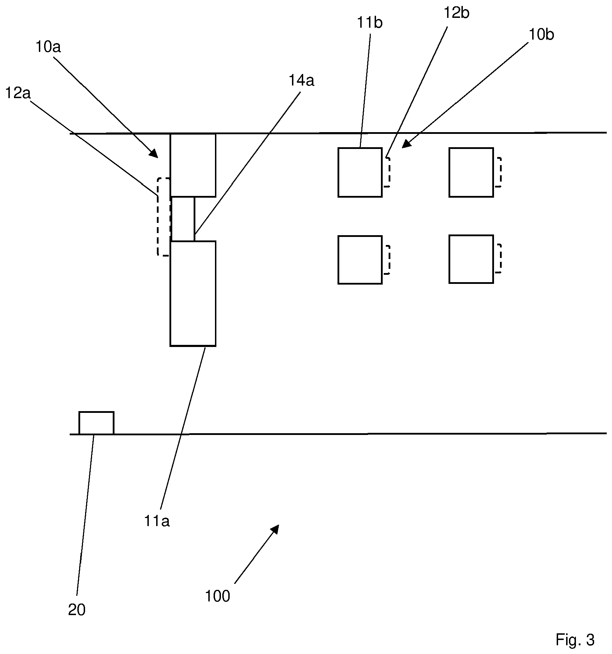

Die Merkmale des Luftfahrzeugs 100 werden im Nachfolgenden mit Bezug auf Figur 3 näher erläutert.

Fig. 3 zeigt eine schematische Darstellung eines Abschnitts eines Luftfahrzeugs 100 nach einem Ausführungsbeispiel der vorliegenden Erfindung.

Das Luftfahrzeug 100 weist ein erstes Kabinenmonument 10a, eine Vielzahl an zweiten Kabinenmonumenten 10b, sowie eine Steuereinrichtung 20 auf. Das erste Kabinenmonument 10a und das zweite Kabinenmonument 10b weisen jeweils einen Monumentskörper 11a, 11b, und eine transparente Folie 12a, 12b, auf. Auf die Darstellung von lichtemittierenden Elementen der transparenten Folien 12a, 12b, wird aus Gründen der Übersichtlichkeit in Figur 3 verzichtet. Das erste Kabinenmonument 10a weist weiterhin einen durchgehend transparenten Bereich 14a auf, wobei die transparente Folie 12a des ersten Kabinenmonuments 10a den transparenten Bereich 14a teilweise überlappt. Die Steuereinrichtung 20 ist mit den Kabinenmonumenten 10a, 10b, verbunden und dazu ausgebildet, deren lichtemittierende Elemente zu steuern, wobei diese Verbindung aus Gründen der Übersichtlichkeit nicht explizit gezeigt wird.

Das erste Kabinenmonument 10a ist als Kabinentrennwand ausgebildet, welche das Luftfahrzeug 100 in zwei Bereiche unterteilt. Die zweiten Kabinenmonumente 10b sind hierbei als Sitzbaugruppen ausgebildet und nur in einem der beiden Bereiche des Luftfahrzeugs angeordnet. Hierdurch ergibt sich ein Bereich, in welchem sich Passagiere während des Fluges in den Sitzbaugruppen aufhalten und einen Bereich, welcher der Kabinencrew vorbehalten ist.

Die transparente Folie 12a des ersten Kabinenmonuments 10a ist auf der zu dem für die Kabinencrew vorgesehenen Bereich zeigenden Seite der Kabinentrennwand angebracht. Die lichtemittierenden Elemente des ersten Kabinenmonuments 10a können hierbei derart ausgebildet sein, dass das von ihnen emittierte Licht durch den transparenten Bereich 14a des ersten Kabinenmonuments 10a hindurch in den für die Passagiere vorgesehenen Bereich des Luftfahrzeugs abgestrahlt wird. Hierdurch ergibt sich eine Art einseitiger Transparenz, bei welcher die Kabinencrew durch den transparenten Bereich 14a hindurch in den Passagierbereich sehen kann, die Passagiere jedoch nicht in den Crewbereich. Dies kann es der Kabinencrew erlauben, den Passagierbereich, etwa während eines Start- oder Landevorgangs, zu überwachen, ohne selbst von den Passagieren beobachtet zu werden. Insbesondere ermöglicht es auch einem Passagier in einer First-Class Suite seine Privatsphäre - soweit durch ein entsprechendes Kabinenlayout und im Hinblick auf geltende Sicherheitsvorschriften realisierbar - vor anderen Passagieren zu bewahren. Alternativ können die lichtemittierenden Elemente des ersten Kabinenmonuments 10a auch derart angeordnet sein, dass sie Licht in den Crewbereich abstrahlen. In diesem Fall kann das Emittieren von Licht in Situationen, in welchen die Kabinencrew den Passagierbereich überwachen soll, abgestellt werden und die lichtemittierenden Elemente in anderen Situationen dafür genutzt werden, der Kabinencrew für sie nützliche Informationen anzuzeigen. Auch eine Kombination dieser beiden Varianten ist denkbar, sowohl mit einer transparenten Folie, welche lichtemittierende Elemente aufweist, welche in beide Richtungen Licht emittieren können, oder mit zwei übereinander oder benachbart angeordneten transparenten Folien.

Die transparenten Folien 12b der zweiten Kabinenmonumente 10b sind jeweils auf den Rückseiten der Monumentskörper 11b angebracht und können so als Bildschirme für die Passagiere auf den rückwärtig angeordneten Sitzgruppen dienen. Je nach Situation können die lichtemittierenden Elemente der zweiten Kabinenmonumente 10b Licht emittieren oder nicht. So könnten die lichtemittierenden Elemente etwa während eines Start- oder Landevorgangs sicherheitsrelevante Informationen anzeigen und während des Fluges kein Licht emittieren, ohne dass die Passagiere den Flug über einen als störend empfundenen ausgeschalteten Bildschirm in ihrem Sichtfeld wahrnehmen. Alternativ oder zusätzlich können die lichtemittierenden Elemente während eines Start- oder Landevorgangs abgestellt sein, um die Aufmerksamkeit der Passagier nicht von Anweisungen der Kabinencrew abzulenken und dann während des Fluges als Bildschirm, etwa für das Abspielen von Unterhaltungsmedien, zu dienen.

Die Steuereinrichtung 20 ist hierbei dazu ausgebildet, die lichtemittierenden Elemente der Kabinenmonumente 10a, 10b, zu steuern. Diese Steuerung kann für jedes Kabinenmonument 10a, 10b, unabhängig oder aufeinander abgestimmt durchgeführt werden. Sollen die lichtemittierenden Elemente der zweiten Kabinenmonumente 10b etwa zum Abspielen von Unterhaltungsmedien genutzt werden, kann jedes der zweiten Kabinenmonumente 10b unabhängig voneinander gesteuert werden. In anderen Situationen kann es vorteilhaft sein, die lichtemittierenden Elemente der zweiten Kabinenmonumente 10b aufeinander abgestimmt zu steuern, um einen möglichst harmonischen, optischen Gesamteindruck der Kabine zu erzeugen.

### Bezugszeichenliste

- 10: Kabinenmonument
- 10a: erstes Kabinenmonument
- 10b: zweites Kabinenmonument
- 11: Monumentskörper
- 11a: Monumentskörper
- 11b: Monumentskörper
- 12: transparente Folie
- 12a: transparente Folie
- 12b: transparente Folie
- 13: lichtemittierendes Element
- 14a: durchgehend transparenter Bereich
- 20: Steuereinrichtung
- 100: Luftfahrzeug

## Patentansprüche

1. Kabinenmonument (10; 10a; 10b), mit:
einem Monumentskörper (11; 11a; 11b), welcher einen durchgehend transparenten Bereich (14a) aufweist; und
einer mit dem Monumentskörper (11; 11a; 11b) verbundenen, transparenten Folie (12; 12a; 12b);
wobei die transparente Folie (12; 12a; 12b) eine Vielzahl an lichtemittierenden Elementen (13) aufweist, und den transparenten Bereich (14a) zumindest teilweise überlappt.

2. Kabinenmonument (10; 10a; 10b) nach Anspruch 1, wobei die lichtemittierenden Elemente (13) als lichtemittierende Dioden ausgebildet sind.

3. Kabinenmonument (10; 10a; 10b) nach einem der Ansprüche 1 oder 2, wobei die transparente Folie (12; 12a; 12b) auf einer Oberfläche des Monumentskörpers (11; 11a; 11b) angebracht ist.

4. Kabinenmonument (10; 10a; 10b) nach einem der vorhergehenden Ansprüche, weiterhin aufweisend eine transparente Schutzbeschichtung.

5. Kabinenmonument (10; 10a; 10b) nach einem der vorhergehenden Ansprüche, wobei die lichtemittierenden Elemente derart angeordnet sind, dass Licht durch den transparenten Bereich (14a) emittiert wird.

6. Kabinenmonument (10; 10a; 10b) nach wenigstens einem der vorhergehenden Ansprüche, wobei das Kabinenmonument als Sitzbauteil oder Kabinentrennwand ausgebildet ist.

7. Luftfahrzeug, mit:
mindestens einem Kabinenmonument (10; 10a; 10b) nach wenigstens einem der vorhergehenden Ansprüche; und
einer Steuereinrichtung (20), welche dazu ausgebildet ist, die Vielzahl an lichtemittierenden Elementen (13) des mindestens einen Kabinenmonuments (10; 10a; 10b) zu steuern.

8. Luftfahrzeug nach Anspruch 7, wobei die Steuereinrichtung (20) dazu ausgebildet ist, die lichtemittierenden Elemente (13) des mindestens einen Kabinenmonuments (10; 10a; 10b) in Abhängigkeit eines Betriebszustands des Luftfahrzeugs zu steuern.

9. Luftfahrzeug nach Anspruch 8, wobei der Betriebszustand des Luftfahrzeugs einen Startvorgang oder einen Landevorgang umfasst, während dem die lichtemittierenden Elemente (13) derart gesteuert werden, dass Licht emittiert wird.

10. Luftfahrzeug nach wenigstens einem der Ansprüche 7 bis 9, aufweisend mindestens zwei Kabinenmonumente (10; 10a; 10b), wobei die Steuereinrichtung (20) dazu ausgebildet ist, die lichtemittierenden Elemente (13) der mindestens zwei Kabinenmonumente (10; 10a; 10b) in Abstimmung zueinander zu steuern.

## Claims

1. Cabin monument (10; 10a; 10b), comprising: a monument body (11; 11a; 11b), which has a continuously transparent area (14a); and a transparent film (12; 12a; 12b) connected to the monument body (11; 11a; 11b); wherein the transparent film (12; 12a; 12b) has a plurality of light-emitting elements (13), and at least partially overlaps the transparent area (14a).

2. Cabin monument (10; 10a; 10b) according to Claim 1, wherein the light-emitting elements (13) are configured as light-emitting diodes.

3. Cabin monument (10; 10a; 10b) according to one of Claims 1 or 2, wherein the transparent film (12; 12a; 12b) is attached to a surface of the monument body (11; 11a; 11b).

4. Cabin monument (10; 10a; 10b) according to one of the preceding claims, further comprising a transparent protective coating.

5. Cabin monument (10; 10a; 10b) according to one of the preceding claims, wherein the light-emitting elements are arranged such that light is emitted through the transparent area (14a).

6. Cabin monument (10; 10a; 10b) according to at least one of the preceding claims, wherein the cabin monument is configured as a seat component or a cabin partition wall.

7. Aircraft, comprising: at least one cabin monument (10; 10a; 10b) according to at least one of the preceding claims; and a control device (20), which is configured to control the plurality of light-emitting elements (13) of the at least one cabin monument (10; 10a; 10b).

8. Aircraft according to Claim 7, wherein the control device (20) is configured to control the light-emitting elements (13) of the at least one cabin monument (10; 10a; 10b) depending on an operating state of the aircraft.

9. Aircraft according to Claim 8, wherein the operating state of the aircraft comprises a take-off procedure or a landing procedure, during which the light-emitting elements (13) are controlled such that light is emitted.

10. Aircraft according to at least one of Claims 7 to 9, comprising at least two cabin monuments (10; 10a; 10b), wherein the control device (20) is configured to control the light-emitting elements (13) of the at least two cabin monuments (10; 10a; 10b) in coordination with one another.

## Revendications

1. Monument de cabine (10 ; 10a ; 10b), comprenant : un corps de monument (11 ; 11a ; 11b), qui présente une zone entièrement transparente (14a) ; et un film transparent (12 ; 12a ; 12b) relié au corps de monument (11 ; 11a ; 11b) ; le film transparent (12 ; 12a ; 12b) présentant une pluralité d'éléments électroluminescents (13), et recouvrant la zone transparente (14a) au moins partiellement.

2. Monument de cabine (10 ; 10a ; 10b) selon la revendication 1, dans lequel les éléments électroluminescents (13) sont conçus comme des diodes électroluminescentes.

3. Monument de cabine (10 ; 10a ; 10b) selon l'une des revendications 1 ou 2, dans lequel le film transparent (12 ; 12a ; 12b) est fixé sur une surface du corps de monument (11 ; 11a ; 11b).

4. Monument de cabine (10 ; 10a ; 10b) selon l'une des revendications précédentes, comprenant en outre un revêtement protecteur transparent.

5. Monument de cabine (10 ; 10a ; 10b) selon l'une des revendications précédentes, dans lequel les éléments électroluminescents sont agencés de telle sorte que la lumière est émise à travers la zone transparente (14a).

6. Monument de cabine (10 ; 10a ; 10b) selon au moins l'une des revendications précédentes, le monument de cabine étant conçu comme un composant de siège ou une cloison de cabine.

7. Aéronef, comprenant : au moins un monument de cabine (10 ; 10a ; 10b) selon au moins l'une des revendications précédentes ; et une unité de commande (20) qui est configurée pour commander la pluralité d'éléments électroluminescents (13) du au moins un monument de cabine (10 ; 10a ; 10b).

8. Aéronef selon la revendication 7, dans lequel l'unité de commande (20) est configurée pour commander les éléments électroluminescents (13) du au moins un monument de cabine (10 ; 10a ; 10b) en fonction d'un état de fonctionnement de l'aéronef.

9. Aéronef selon la revendication 8, dans lequel l'état de fonctionnement de l'aéronef comprend une phase de décollage ou une phase d'atterrissage, pendant laquelle les éléments électroluminescents (13) sont commandés de telle sorte que de la lumière est émise.

10. Aéronef selon au moins l'une des revendications 7 à 9, comprenant au moins deux monuments de cabine (10 ; 10a ; 10b), l'unité de commande (20) étant configurée pour commander les éléments électroluminescents (13) des au moins deux monuments de cabine (10 ; 10a ; 10b) en coordination l'un avec l'autre.
